# EUROPÄISCHE PATENTANMELDUNG

(11) **EP 0 542 281 A1**
(43) Veröffentlichungstag der Anmeldung: **19.05.1993**
(21) Anmeldenummer: 92119389.2
(22) Anmeldetag: 12.11.1992
(51) Int. Cl.: B60G 17/02, B62K 25/04

(54) **Vorrichtung zur längenverstellbaren Verbindung von zwei Bauelementen**

(30) Priorität: 12.11.1991 DE 4137202
(71) Anmelder: INDUSTRIEANLAGEN-BETRIEBSGESELLSCHAFT M.B.H., D-85521 Ottobrunn (DE)
(72) Erfinder: Höbel, Rudolf, W-8011 Peiss/Aying (DE); Hufnagl, Johannes, W-8011 Peiss/Aying (DE)
(74) Vertreter: Bohnenberger, Johannes, Dr.

(57) **Zusammenfassung**

Bei Federbeinen von Motorrädern oder Kraftfahrzeugen ist es wünschenswert, deren Länge einstellen zu können. Es ist bekannt, in einem Endabschnitt (16) des Federbeins (2) eine Bohrung (11) mit einem Innengewinde (12) vorzusehen und an einem achsführenden Teil (1) einen Zapfen (21) mit einem zum Innengewinde (12) korrespondierenden Außengewinde (22) anzubringen. Üblicherweise wird ein Konterelement (30) auf das Außengewinde (22) des Zapfens (21) aufgeschraubt und gegen den Endabschnitt (16) verspannt. Nachteilig an dieser Anordnung ist der Umstand, daß das für die Einstellung und Sicherheit entscheidende Außengewinde (22) verschmutzen kann und darüber hinaus der Benutzer nicht weiß, ob der Zapfen (21) weit genug in die Bohrung (11) eingeschraubt ist. Es wird vorgeschlagen, auf dem Endabschnitt (16) ein Sicherungsaußengewinde (13) anzubringen und das Konterelement (30) derart zu dimensionieren und auf das Sicherungsaußengewinde (13) aufzuschrauben, daß das Konterelement (30) gegen das Teil (1) mit dem Zapfen (21) unter Anschlag der beiden Teile gegeneinander spannbar ist.

## Beschreibung

Die Erfindung betrifft eine Vorrichtung zur längenverstellbaren Verbindung von zwei Bauelementen nach dem Oberbegriff des Patentanspruches 1.

Insbesondere ist diese Vorrichtung in Zusammenhang mit Federbeinen von Motorrädern oder Kraftfahrzeugen geeignet.

Die Bodenfreiheit von Kraftfahrzeugen und Motorrädern ist normalerweise konstruktiv festgelegt und wird als festes Maß für das Leerfahrzeug angegeben. Speziell für sportlich eingesetzte Fahrzeuge ist es jedoch wünschenswert, die Bodenfreiheit ändern zu können, um z.B. den Schwerpunkt tiefer zu legen oder auch wegen der optischen Wirkung. Eine solche Höhenveränderung soll einfach und schnell durchführbar sein, und zwar ohne Austausch der federnden und dämpfenden Elemente und auch unabhängig von einer Verstellung der Federvorspannung.

Bei Federbeinen für Motorräder geht man bisher so vor, daß das achsführende Element am Unterende des Federbeins in dessen Endstück eingeschraubt oder auf dieses aufgeschraubt und durch eine Kontermutter gesichert wird. Will man das Fahrzeug tiefer legen, so schraubt man das Endstück tiefer in das Federbein ein (oder auf) und sichert es danach wieder durch die Kontermutter.

Problematisch hierbei ist der Umstand, daß das Maß der Verstellung gegenüber einer Grundlänge nur durch Abzählen der beim Verstellen gemachten Umdrehungen möglich ist. Man muß sich also sehr genau merken, was man gemacht hat, wenn man eine gleichmäßige Verstellung aller Federbeine vornehmen will. Von außen, also nach Vornahme der Verstellung, ist nur sehr ungenau zu erkennen, welche Länge eingestellt wurde. Dies bedeutet aber gleichzeitig, daß es leicht passieren kann, daß die Schraubbindung nur noch über wenige Gewindegänge besteht und somit die Festigkeit der Verbindung zwischen dem achsführenden Teil und dem Federbeinende auf ein sicherheitsgefährdendes Maß verringert wird, ohne daß der Benutzer dies bemerkt.

Schließlich besteht bei der herkömmlichen Bauweise noch ein Problem darin, daß Gewinde verschmutzen und bei häufiger Verstellung (falls diese bei höherer Verschmutzung überhaupt noch möglich ist) die Gewinde beschädigt werden.

Aus der DE-A 21 46 723 ist eine Anordnung zur statischen Niveauregulierung bei Fahrzeugen bekannt, bei welcher die Verstellung über eine Gewindestange und einen mit ihr gekoppelten Stellmotor erfolgt. Der Stellmotor ist mit dem Ende der Gewindestange, an welchem er angekoppelt ist, verkapselt, so daß zwar kein Schmutz eindringen kann, eine optische Zugänglichkeit aber auch nicht gegeben ist. Darüber hinaus ist die bekannte Vorrichtung sehr aufwendig.

Der Erfindung liegt die Aufgabe zugrunde, eine Vorrichtung der eingangs genannten Art auf einfache Weise dahingehend weiterzubilden, daß eine verbesserte Handhabbarkeit bei hoher Betriebssicherheit gewährleistet ist.

Diese Aufgabe wird durch die im Kennzeichnen des Patentanspruches 1 angegebenen Merkmale gelöst.

Ein wesentlicher Punkt der Erfindung liegt darin, daß das für die Verbindung zwischen den beiden Bauelementen wesentliche Gewindepaar nicht zum Sichern bzw. Kontern verwendet wird, sondern dafür ein weiteres Gewinde vorgesehen ist. Dadurch ergibt sich einerseits eine Abdeckung des für die Festigkeit entscheidenden Gewindes, andererseits auch gleichzeitig eine optische Anzeigemöglichkeit für die Länge des Gewindeeingriffes und damit für die Festigkeit, da die Aufschraubtiefe des Konterelements auf dem ersten Bauteil direkt ein Maß für diese Eingriffslänge darstellt.

Bei einer bevorzugten Ausführungsform der Erfindung sind Anzeigeeinrichtungen wie Marken oder dergleichen am Zapfen vorgesehen, welche dann, wenn das Konterelement gegen das zweite Bauelement gespannt ist, in Zusammenwirken mit dem Konterelement ein Maß für die Länge anzeigen, über welche das Außengewinde am zweiten Bauelement mit dem Innengewinde im ersten Bauelement in Eingriff steht. Derartige Marken können echte Skalen sein, jedoch kann auch schon der Anfang des Sicherungsaußengewindes eine Marke darstellen, die z.B. dann sichtbar wird, wenn das Mindestmaß der zulässigen Einschraubtiefe erreicht ist.

Vorzugsweise sind Anschlageinrichtungen am Konterelement und am ersten Bauelement vorgesehen, welche den Schraubweg des Monterelements in Richtung auf das zweite Bauelement begrenzen. Der Anbringungsort für diese Anschlageinrichtung ist hierbei so gewählt, daß bei Unterschreiten der Mindest-Einschraubtiefe das Konterelement nicht mehr gegen das zweite Bauelement gespannt werden kann, so daß der Benutzer hieran ein Unterschreiten der Mindest-Einschraubtiefe erkennen kann. Diese Anschlageinrichtungen umfassen bei einer bevorzugten Ausführungsform der Erfindung eine Dichtungseinrichtung, welche das Konterelement gegenüber dem ersten Bauelement abdichtet, so daß neben der Anschlagwirkung auch gleichzeitig ein Schutz gegenüber Verschmutzung der Gewinde sichergestellt ist.

Vorzugsweise sind zwischen dem Konterelement und dem zweiten Bauelement erste Dichtungseinrichtungen vorgesehen, so daß bei gekonterter Verbindung das Eindringen von Schmutz verhindert wird. Diese können einen elastischen Dichtungsring umfassen, der außerhalb der Kontaktflächen zwischen dem Konterelement und dem zweiten Bauelement angeordnet ist, so daß man das Konterelement sehr fest gegen das zweite Bauelement spannen kann, ohne dabei den elastischen Dichtungsring zu beschädigen.

Vorzugsweise sind zweite Dichtungseinrichtungen zwischen dem Konterelement und dem ersten Bauelement vorgesehen, wie dies weiter oben am Beispiel der Anschlageinrichtungen schon angedeutet wurde. Diese können aber auch einen einfachen elastischen Dichtungsring umfassen, der an einem vom zweiten Bauelement abgewandten Ende des Konterelements angebracht ist. Am ersten Bauelement wird dann, angrenzend an das Sicherungsaußengewinde gegenüber dem zweiten Bauelement ein glattflächiger zylindrischer Außenmantel ausgebildet, auf welchem der elastische Dichtungsring anliegt. Eine kinematische Umkehr, also ein Befestigen des elastischen Dichtungsringes am zweiten Bauelement und die Anbringung einer zylindrischen Bohrung im Konterelement ist im Prinzip auch möglich.

Bei erhöhten Sicherheitsanforderungen kann eine Kontermutter auf dem Sicherungsaußengewinde vorgesehen sein, über welche das Konterelement nach Spannen gegen das zweite Bauelement nochmals gesichert werden kann.

Das Konterelement kann mit entsprechend ausgebildeten Außenflächen zum Ansetzen eines Gabelschlüssels ausgerüstet sein. Vorzugsweise werden jedoch Vertiefungen zum Ansetzen eines Hakenschlüssels vorgesehen.

Die obigen Ausführungen wie auch die nachfolgenden Ausführungsbeispiele der Erfindung sind an einem (Motorrad-) Federbein erläutert. Es sei aber an dieser Stelle darauf hingewiesen, daß sich die Erfindung nicht nur auf diese speziellen Bauelemente bezieht, vielmehr ist sie von allgemeiner Bedeutung. Insbesondere kann - im Kraftfahrzeugbereich - die erfindungsgemäße Vorrichtung auch zur einstellbaren Verbindung ganz anderer Bauelemente verwendet werden. Lediglich beispielhaft sei hier auf Spurstangen, Vergasergestänge oder Bremsgestänge verwiesen. Außerhalb des Kfz-Bereiches läßt sich die erfindungsgemäße Vorrichtung auch für die Verbindung von Bauelementen im Flugzeugbau (Verstellgestänge für Klappen oder dergleichen) oder sogar im Bereich des Bauwesens anwenden. Hier sei nur beispielhaft auf die Anwendungsmöglichkeit der erfindungsgemäßen Vorrichtung bei Baumaschinen oder auch bei Spindelstützen verwiesen.

Nachfolgend werden bevorzugte Ausführungsformen der Erfindung anhand von Abbildungen näher erläutert. Hierbei zeigen:
- Fig. 1: einen Teil-Längsschnitt durch eine erste bevorzugte Ausführungsform der Erfindung in noch nicht zusammengebautem Zustand,
- Fig. 2: eine Darstellung der Ausführungsform nach Fig. 1 in zusammengebautem Zustand,
- Fig. 3: eine abgeänderte Ausführungsform ähnlich der nach den Figuren 1 und 2,
- Fig. 4: einen Teilschnitt durch eine weitere Ausführungsform der Erfindung mit umgekehrten Elementen,
- Fig. 5 und 6: teilgeschnittene Darstellungen von zwei weiteren Ausführungsformen der Erfindung.

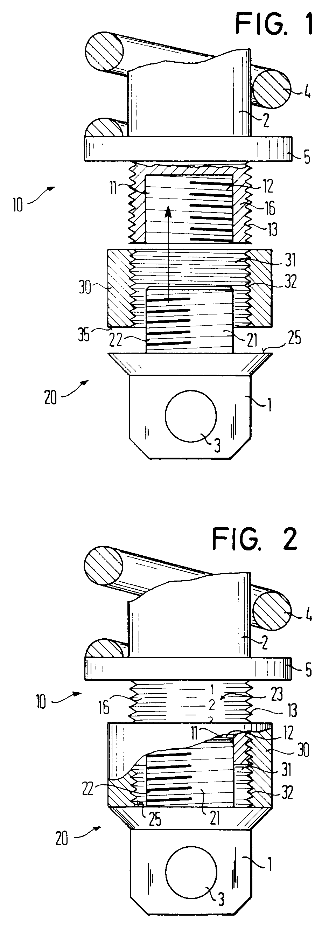

Im folgenden wird anhand der Figuren 1 und 2 eine erste bevorzugte Ausführungsform der Erfindung gezeigt, wobei dort ein Federbein 2 gezeigt ist, dessen Feder 4 auf einem Federsitz 5 aufsitzt. Das Federbein 2 kann mit einem achsführenden Teil 1 verbunden werden, welches mittels einer Bohrung 3 mit der Achse (nicht gezeigt) in Wirkverbindung gebracht werden kann.

Bei der in den Figuren 1 und 2 gezeigten Ausführungsform stellt das obere Teil (das Federbein) das erste Bauelement 10 und das untere Teil (das achsführende Teil 1) das zweite Bauelement 20 dar. Das erste Bauelement 10 weist einen Endabschnitt 16 auf, in welchem eine konzentrische Bohrung 11 sitzt. In der konzentrischen Bohrung 11 ist ein Innengewinde 12 angebracht. Am Außenumfang des Endabschnittes 16 ist ein Sicherungsaußengewinde 13 aufgebracht.

Das zweite Bauelement weist einen Zapfen 21 auf, welcher ein Außengewinde 22 trägt. Das Außengewinde 22 entspricht hinsichtlich Durchmesser und Steigung dem Innengewinde 12.

Wie in Fig. 2 gezeigt, kann der Zapfen 21 mit seinem Außengewinde 22 in das Innengewinde 12 des ersten Bauelements 10 eingeschraubt werden. Die Einschraubtiefe bestimmt somit die Gesamtlänge des hier gezeigten Federbeins.

Um nun nach einem Einstellen der gewünschten Federbeinlänge (durch entsprechendes Verschrauben der beiden Teile gegeneinander) diese Einstellung zu fixieren und eine drehfeste und spielfreie Verbindung zwischen dem achsführenden Teil 1 und dem Federbein 2 zu erzielen, ist ein Konterelement 30 vorgesehen. Dieses Konterelement 30 ist hülsenförmig ausgebildet und weist eine innere Bohrung 31 mit einem Innengewinde 32 auf. Das Innengewinde 32 entspricht hinsichtlich Durchmesser und Steigung dem Sicherungsaußengewinde 13. An seinem dem zweiten Bauelement 20 (also hier dem achsführenden Teil 1) zugewandten Ende weist das Konterelement 30 eine Kontaktfläche 35 auf. Dieser Kontaktfläche 35 entspricht eine Kontaktfläche 25 am zweiten Bauelement 20.

Schraubt man die Teile zusammen, so wird der in Fig. 2 gezeigte Zustand erreicht. Hierbei ist der Zapfen 21 mit seinem Außengewinde 22 in die Bohrung 11 des Endabschnitts 16 eingeschraubt. Das Konterelement 30 ist mit seinem Innengewinde 32 auf das Außengewinde 13 des Endabschnitts 16 aufgeschraubt und in Richtung auf das zweite Bauelement 20 so verspannt, daß die Kontaktflächen 25 und 35 fest aufeinander gepreßt sind. Dadurch ist einerseits die gewünschte feste Verbindung zwischen dem ersten und dem zweiten Bauelement erreicht, andererseits ist der Raum rings um das Außengewinde 22 bzw. der Raum innerhalb des Konterelements 30 sowie der Raum innerhalb der Bohrung 11 gegenüber der Umgebung vollständig abgedichtet. Somit kann kein Schmutz oder dergleichen in die Anordnung eindringen, so daß nach einem Lösen des Konterelements 30 die Schraubverbindung zwischen dem ersten Bauelement 10 und dem zweiten Bauelement 20, also das Innengewinde 12 und das Außengewinde 22 immer sauber und funktionsfähig bleiben. Auch oftmaliges Verstellen der Länge kann somit ohne die Gefahr einer Abnutzung der Gewinde durchgeführt werden.

Aus Fig. 2 wird noch ein weiteres vorteilhaftes Merkmal ersichtlich, das durch die hier gezeigte Auführungsform des Konterelements 30 erzielbar ist. Der dem ersten Bauelement 10 zugewandte Rand des Konterelements 30 bildet nämlich einen Maßstab oder eine Anzeige dafür, wie weit der Zapfen 21 mit seinem Außengewinde 22 in das Innengewinde 12 der Bohrung 11 eingeschraubt ist. Um dieses Maß für den Benutzer deutlich zu machen, sind auf der Außenfläche des Endabschnittes 16 Anzeigeeinrichtungen 23 in Form einer Skala (vor dem Aufbringen des Außengewindes 13) eingeschnitten. Somit kann man auch in vollständig zusammengebautem Zustand der Anordnung (wie in Fig. 2 gezeigt) von außen leicht erkennen, über welche Einschraublänge das erste Bauelement 10 mit dem zweiten Bauelement 20 verbunden ist. Wenn man also zu der in Fig. 2 gezeigten Anordnung als Betriebsanleitung die Weisung gibt, es müsse der Einstellwert immer kleiner als "drei" sein, so ist dadurch gewährleistet, daß der Benutzer nicht versehentlich das erste Bauelement 10 zum zweiten Bauelement 20 zu weit herausschraubt, so daß eine sicherheitsgefährdende Verbindung vermieden werden kann.

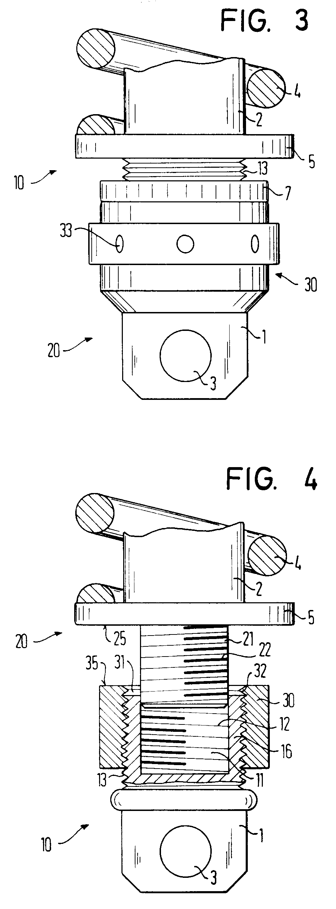

Die in Fig. 3 gezeigte Variante gleicht im Prinzip dem zuvor beschriebenen Aufbau. Zusätzlich ist hier noch eine Kontermutter 7 vorgesehen, die über ein entsprechend ausgebildetes Innengewinde ebenso wie das Konterelement 30 auf das Sicherungsaußengewinde 13 des ersten Bauteils 10 aufgeschraubt ist. Diese Kontermutter 7 dient dazu, ein Lösen des Konterelements 30 bezüglich des zweiten Bauelements 20 wirksam zu verhindern.

Zum Festziehen oder Öffnen der Gewindeverbindung zwischen dem Konterelement 30 und dem zweiten Bauelement 20 ist das Konterelement 30 in regelmäßigen Abständen rings um seinen Außenumfang mit Vertiefungen 33 versehen, in welche ein Hakenschlüssel einsetzbar ist.

Die in Fig. 4 gezeigte Auführungsform der Erfindung entspricht einer kinematischen Umkehr der Ausführungsform nach den Figuren 1 und 2. Bei dieser Ausführungsform sind (ebenso wie bei allen anderen hier vorgestellten Zeichnungen) gleich wirkende Teile mit denselben Bezugsziffern versehen. Es entspricht somit bei dieser Ausführungsform der Erfindung das Federbein 2 dem zweiten Bauelement 20 und das achsführende Teil 1 dem ersten Bauelement 10. Somit ist der Zapfen 21 am Federbein 2 angebracht, während der Endabschnitt 16 am achsführenden Teil 1 sitzt. Die Anschlagfläche 25 des zweiten Bauelements 20 für die Anschlagfläche 35 des Konterelements 30 ist auf der Unterseite des Federsitzes 5 vorgesehen. Im übrigen entspricht die Funktion dieser Ausführungsform der Erfindung derjenigen nach den Figuren 1 und 2.

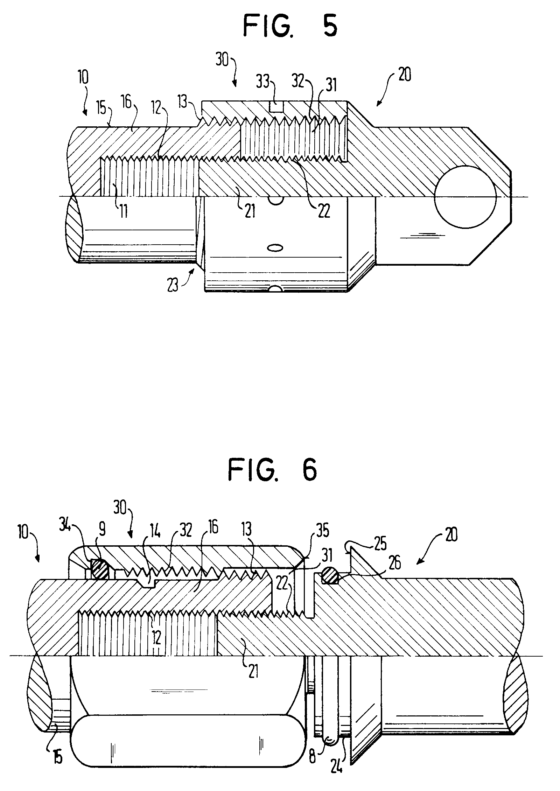

Bei der in Fig. 5 gezeigten Variante der Erfindung ist das Sicherungsaußengewinde 13 auf der Außenumfangsfläche des Endabschnitts 16 relativ kurz ausgebildet und an dem dem zweiten Bauelement 20 zugewandten Ende des Endabschnitts 16 angebracht. Nach dem Sicherungsaußengewinde 13 ist die Außenumfangsfläche des Endabschnitts 16 mit einem glattflächigen Außenmantelabschnitt ausgebildet. Bei einer entsprechenden Dimensionierung bildet somit das dem zweiten Bauelement 20 abgewandte Ende des Sicherungsaußengewindes 13 Anzeigeeinrichtungen 23. Wenn dieses Gewindeende nämlich sichtbar wird, weiß der Benutzer, daß er die minimale Einschraubtiefe (zwischen den Gewinden 12 und 22) erreicht hat.

Die in Fig. 6 gezeigte weitere Ausführungsform der Erfindung zeichnet sich dadurch aus, daß zum einen zusätzliche Abdichtungseinrichtungen vorgesehen sind, zum anderen eine Sicherung, um die Mindest-Einschraubtiefe zu gewährleisten.

Die Dichtungseinrichtungen umfassen einen ersten Dichtungsring 8, welcher in einer Nut 26 am zweiten Bauteil 20 sitzt. Diese Nut 26 wiederum ist in einem Dichtabschnitt 24 vorgesehen, welcher konzentrisch zum Zapfen 21 ausgebildet ist und an dessen, dem ersten Bauelement 10 abgewandten Ende angebracht ist. Der Durchmesser des Dichtabschnitts 24 ist größer als derjenige des Zapfens 21.

Die Bohrung 31 des Konterelements 30 ist in ihrem dem zweiten Bauelement 20 zugewandten Endabschnitt zylindrisch ausgeführt und bei der Konterfläche 35 angefast. Der Durchmesser der Bohrung 31 ist in diesem Bereich geringfügig größer als der Außendurchmesser des Dichtabschnitts 24. Wenn somit das Konterelement 30 in Richtung auf das zweite Bauelement 20 geschraubt wird, so schiebt sich das Konterelement 30 über den ersten Dichtungsring 8 und preßt diesen in die Nut 26. Dadurch ist gewährleistet, daß einerseits eine sichere Abdichtung zwischen dem zweiten Bauteil 20 und dem Konterelement 30 erfolgt, andererseits aber die Auflagekraft, mit welcher die Kontaktfläche 25 auf die Kontaktfläche 35 gepreßt wird, nicht auf den elastischen ersten Dichtungsring 8 wirkt.

Am anderen Ende des Konterelements 30 ist ein zweiter Dichtungsring 9 vorgesehen, welcher eine Abdichtung zwischen dem Konterelement 30 und dem ersten Bauelement 10 sicherstellt. Dieser Dichtungsring 9 ist auf einem glattflächigen Außenmantelabschnitt 15 in Richtung auf das zweite Bauelement 20 verschiebbar, wenn das Konterelement 30 in Richtung auf das zweite Bauelement 20 verschraubt wird. Diese Verschiebebewegung wird durch eine erste Hakennut 14 im Außenmantel des Endabschnitts 16 des ersten Bauelements 10 begrenzt. Dieser ersten Hakennut 14 entspricht eine zweite Hakennut 34, in welcher der zweite Dichtungsring 9 bezüglich des Konterelements 30 festgesetzt ist. Die Haken-Schrägflächen der beiden Hakennuten 14, 34 sind so ausgebildet, daß bei einem Verschrauben des Konterelements 30 in Richtung auf das zweite Bauelement (in Fig. 6 wandert der zweite Dichtungsring 9 nach rechts) dieser Dichtungsring 9 dann, wenn die beiden Hakennuten 14, 34 im wesentlichen übereinander liegen, sich ausdehnen kann und die beiden Teile (10, 30) in dieser Schraubrichtung gegeneinander verkeilt. Wird das Konterelement 30 dann wieder vom zweiten Bauelement 20 gelöst (der zweite Dichtungsring 9 wird in Fig. 6 nach links geschraubt), so rutscht der zweite Dichtungsring 9 wieder aus der ersten Hakennut 14 heraus, so daß die in Fig. 6 gezeigte Position erreicht wird.

Die beiden Hakennuten 14 und 34 werden nun an derartigen Stellen angebracht, daß bei Fluchtung der Hakennuten 14, 34 und Sperren der beiden Teile 10 und 30 gegeneinander sowie gleichzeitigem Aufsitzen der Kontaktfläche 25 auf der Kontaktfläche 35 die Einschraubtiefe des Gewindes 21 im Gewinde 12 das für die Sicherheit notwendige Mindestmaß aufweist. Somit ist sichergestellt, daß auch der (unvorsichtige) Benutzer nur dann das Konterelement 30 gegen das zweite Bauteil 20 spannen kann, wenn die Schraubverbindung zwischen dem ersten Bauelement 10 und dem zweiten Bauelement 20 nicht zu weit offen ist.

Selbstverständlich sind die hier gezeigten Maßnahmen, insbesondere die Abdichtung der Teile gegeneinander oder die Anbringung von Anzeigeeinrichtungen oder Anschlageinrichtungen bei allen Ausführungsformen der Erfindung verwendbar.

### Bezugszeichenliste

- 1: achsführendes Teil
- 2: Federbein
- 3: Bohrung
- 4: Feder
- 5: Federsitz
- 7: Kontermutter
- 8: erster Dichtungsring
- 9: zweiter Dichtungsring
- 10: erstes Bauelement
- 11: Bohrung
- 12: Innengewinde
- 13: Sicherungsaußengewinde
- 14: erste Hakennut
- 15: glattflächiger Außenmantelabschnitt
- 16: Endabschnitt
- 20: zweites Bauelement
- 21: Zapfen
- 22: Außengewinde
- 23: Anzeigeeinrichtung
- 24: Dichtabschnitt
- 25: Kontaktfläche
- 26: Nut
- 30: Konterelement
- 31: Bohrung
- 32: Innengewinde
- 33: Vertiefung
- 34: zweite Hakennut
- 35: Konaktfläche

## Patentansprüche

1. Vorrichtung zur längenverstellbaren Verbindung von zwei Bauelementen, nämlich einem ersten mit einem zweiten zug- und schubübertragenden Bauelement (10, 20), insbesondere für Federbeine von Motorrädern oder Kraftfahrzeugen, umfassend eine Bohrung (11) mit einem Innengewinde (12) im ersten Bauelement (10),
einen Zapfen (21) mit einem zum Innengewinde (12) korrespondierenden Außengewinde (22) am zweiten Bauelement (20), und ein Konterelement (30) mit einer Bohrung (31) und einem Innengewinde (32) zum Verspannen bzw. Kontern des ersten Bauelements (10) zum zweiten Bauelement (20),
**dadurch gekennzeichnet**,
daß das erste Bauelement (10) ein Sicherungsaußengewinde (13) aufweist und daß das Konterelement (30) derart dimensioniert und auf das Sicherungsaußengewinde (13) aufschraubbar ist, daß das Konterelement (30) gegen das zweite Bauelement (20) unter Anschlag der beiden Teile gegeneinander spannbar ist.

2. Vorrichtung nach Anspruch 1,
**dadurch gekennzeichnet**,
daß der Zapfen (21) Anzeigeeinrichtungen (23) aufweist, welche dann, wenn das Konterelement (30) gegen das zweite Bauelement (20) gespannt ist, in Zusammenwirkung mit dem Konterelement (30) ein Maß für die Länge anzeigt, über welche das Außengewinde (22) am zweiten Bauelement (20) mit dem Innengewinde (12) im ersten Bauelement (10) in Eingriff steht.

3. Vorrichtung nach einem der vorhergehenden Ansprüche,
**dadurch gekennzeichnet**,
daß Anschlageinrichtungen (14, 34, 8) am Konterelement (30) und am ersten Bauelement (10) vorgesehen sind, die den (Schraub-) Weg des Konterelements (30) in Richtung auf das zweite Bauelement (20) begrenzen.

4. Vorrichtung nach Anspruch 3,
**dadurch gekennzeichnet**,
daß die Anschlageinrichtungen eine Dichtungseinrichtung (9) umfassen, welche das Konterelement (30) gegenüber dem ersten Bauelement (10) abdichten.

5. Vorrichtung nach einem der vorhergehenden Ansprüche,
**dadurch gekennzeichnet**,
daß erste Dichtungseinrichtungen (8) zwischen dem Konterelement (30) und dem zweiten Bauelement (20) vorgesehen sind.

6. Vorrichtung nach Anspruch 5,
**dadurch gekennzeichnet**,
daß die ersten Dichtungseinrichtungen einen ersten elastischen Dichtungsring (8) umfassen, der außerhalb von Kontakteingriffsflächen (25, 35) zwischen dem Konterelement (30) und dem zweiten Bauelement (20) angeordnet ist.

7. Vorrichtung nach einem der vorhergehenden Ansprüche,
**dadurch gekennzeichnet**,
daß zweite Dichtungseinrichtungen (9) zwischen dem Konterelement (30) und dem ersten Bauelement (10) vorgesehen sind.

8. Vorrichtung nach Anspruch 7,
**dadurch gekennzeichnet**,
daß die zweiten Dichtungseinrichtungen einen zweiten elastischen Dichtungsring (9) umfassen, der an einem vom zweiten Bauelement (20) abgewandten Ende des Konterelements (30) angebracht ist, und daß das erste Bauelement (10) angrenzend an das Sicherungsaußengewinde (13) gegenüber dem zweiten Bauelement (20), einen glattflächigen, zylindrischen Außenmantelabschnitt (15) aufweist, auf welchem der zweite elastische Dichtungsring (9) anliegt.

9. Vorrichtung nach einem der vorhergehenden Ansprüche,
**gekennzeichnet durch**
eine Kontermutter (7), die auf das Sicherungsaußengewinde (13) aufschraubbar und gegen das Konterelement (30) spannbar ist.

10. Vorrichtung nach einem der vorhergehenden Ansprüche,
**dadurch gekennzeichnet**,
daß das Konterelement (30) Vertiefungen (33) zum Ansetzen eines Hakenschlüsseles aufweist.
